(19) Europäisches Patentamt / European Patent Office / Office européen des brevets

(11) **EP 3 669 297 B1**

(12) **EUROPEAN PATENT SPECIFICATION**

(45) Date of publication and mention of the grant of the patent:
**03.07.2024 Bulletin 2024/27**

(21) Application number: **18753415.1**

(22) Date of filing: **13.08.2018**

(51) International Patent Classification (IPC):
**G06V 40/12** $^{(2022.01)}$    **G06V 10/82** $^{(2022.01)}$

(52) Cooperative Patent Classification (CPC):
**G06V 40/12; G06V 10/82;** G06V 40/53

(86) International application number:
**PCT/EP2018/071895**

(87) International publication number:
**WO 2019/034589 (21.02.2019 Gazette 2019/08)**

(54) **A BIOMETRIC CRYPTOSYSTEM**

EIN BIOMETRISCHES CRYPTOSYSTEM

UN CRYPTOSYSTÈME BIOMÉTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.08.2017 GB 201713099**

(43) Date of publication of application:
**24.06.2020 Bulletin 2020/26**

(73) Proprietor: **Norwegian University of Science and Technology (NTNU)**
**7491 Trondheim (NO)**

(72) Inventors:
• **YANG, Bian**
  **2825 Gjøvik (NO)**
• **LI, Guoqiang**
  **2834 Raufoss (NO)**
• **PENG, Jialiang**
  **Harbin 150030 (CN)**

(74) Representative: **Gill Jennings & Every LLP**
**The Broadgate Tower**
**20 Primrose Street**
**London EC2A 2ES (GB)**

(56) References cited:
**WO-A1-2011/113478**

• **PANDEY ROHIT KUMAR ET AL: "Deep Secure Encoding for Face Template Protection", 2016 IEEE CONFERENCE ON COMPUTER VISION AND PATTERN RECOGNITION WORKSHOPS (CVPRW), IEEE, 26 June 2016 (2016-06-26), pages 77-83, XP033027813, DOI: 10.1109/CVPRW.2016.17 [retrieved on 2016-12-16]**
• **KAUR HARKEERAT ET AL: "Gaussian Random Projection Based Non-invertible Cancelable Biometric Templates", PROCEDIA COMPUTER SCIENCE, vol. 54, 1 January 2015 (2015-01-01), pages 661-670, XP055921859, AMSTERDAM, NL ISSN: 1877-0509, DOI: 10.1016/j.procs.2015.06.077**
• **PANDEY ROHIT KUMAR ET AL: "Deep Secure Encoding for Face Template Protection", 2016 IEEE CONFERENCE ON COMPUTER VISION AND PATTERN RECOGNITION WORKSHOPS (CVPRW), IEEE, 26 June 2016 (2016-06-26), pages 77-83, XP033027813, DOI: 10.1109/CVPRW.2016.17**
• **Rohit Kumar Pandey: "Privacy Preserving Representation Learning using Deep Neural Networks", , 1 January 2017 (2017-01-01), XP055517225, ISBN: 978-1-369-59330-3 Retrieved from the Internet: URL:https://ubir.buffalo.edu/xmlui/handle/10477/77763**

- **PANDEY ROHIT KUMAR ET AL: "Deep Secure Encoding for Face Template Protection", 2016 IEEE CONFERENCE ON COMPUTER VISION AND PATTERN RECOGNITION WORKSHOPS (CVPRW), IEEE, 26 June 2016 (2016-06-26), pages 77-83, XP033027813, DOI: 10.1109/CVPRW.2016.17 [retrieved on 2016-12-16]**
- **Rohit Kumar Pandey: "Privacy Preserving Representation Learning using Deep Neural Networks", , 1 January 2017 (2017-01-01), XP055517225, ISBN: 978-1-369-59330-3 Retrieved from the Internet: URL:https://www.proquest.com/docview/18779 59576?pq-origsite=gscholar&fromopenview=tr ue&sourcetype=Dissertations%20&%20Theses**
- **KAUR HARKEERAT ET AL: "Gaussian Random Projection Based Non-invertible Cancelable Biometric Templates", PROCEDIA COMPUTER SCIENCE, vol. 54, 1 January 2015 (2015-01-01), pages 661-670, XP055921859, AMSTERDAM, NL ISSN: 1877-0509, DOI: 10.1016/j.procs.2015.06.077**

**Description**

**BACKGROUND**

In current society, biometrics is presented as a promising solution for identity authentication and access control. A typical biometric authentication system uses a few samples of a user's biometric traits (e.g., face, fingerprint or iris) to extract and store the biometric feature data as a template of the user for enrolment. During authentication, the verification or identification is performed by making a comparison between a probe template extracted from a given sample and the reference template. Access is granted or denied depending on a comparison score. Since the biometric trait is permanently related to a specific user, it cannot be changed when it is compromised, either through lost, stolen, or unauthorized copies. In this sense, the secure use of biometric data is fundamental in biometric systems. In fact, biometric data is considered as sensitive data in European Union General Data Protection Regulation 2016/679. This means that the use of biometric data should be subject to the right of privacy preservation. More importantly, the leakage of biometric information constitutes a serious threat to personal privacy, therefore, biometric template protection is essential for the deployment of biometric systems. To that end, the ISO/IEC 24745 standard on biometric information protection establishes that biometric template protection (BTP) schemes should meet the following three main requirements:

Irreversibility: It should be difficult to get the original biometric information from a given protected template.

Unlinkability: It should be infeasible to ascertain whether two or more given protected templates are derived from the same biometric trait of a user.

Renewability: It should be easy to reissue a new protected template, not matching the old template, when the old one is deemed invalid.

In addition to satisfying these requirements, an ideal BTP scheme should not seriously degrade the recognition performance of a biometric system. Consequently, there are many BTP schemes that have been proposed to protect biometric templates in the last decade. These BTP schemes can be generally divided into two categories: feature transformations and biometric cryptosystems.

In the feature transformation schemes, a noninvertible or one-way function transforms original biometric templates into multi-transformed templates using different transformation parameters. The transformed template is stored in the template database, and the transformation function or its parameters should be kept as secret. The same transformation is also applied on the probe biometric sample during the authentication phase. The well-known examples of template transformation schemes include Biohashing and cancellable biometrics (CB). However, the feature transformation schemes that depend on user-specific secrets, such as Biohashing and Bloom filter-based schemes, are vulnerable to security threats under the stolen-token scenario. Although other CB schemes have been proposed to overcome the security defects inherent to the stolen-token scenario, the protected templates in CB schemes are exposed to the risks of cross-comparison attacks on the same biometric trait of a user. In addition, the same drawback of CB schemes is the fact that the biometric recognition performance is degraded seriously.

A Biometric cryptosystem (BC) is also referred to as the helper data-based scheme, which is typically derived from error correction coding (ECC) techniques. In a biometric cryptosystem, a secure sketch is extracted by combining the template with a random key. The sketch is stored into the database instead of the original template. The same key can be released from the reference template when the probe biometric sample is sufficiently close to the enrolled sample. BC schemes can tolerate difference between the reference templates and the probe templates with the help of an error correcting code. A hash function is typically always used to secure the random keys in BC schemes. Examples of well-known biometric cryptosystems are Fuzzy Commitment Scheme (FCS), Fuzzy Vault Scheme (FVS), and Fuzzy Extractor. Essentially, the FCS and the FVS can be regarded as the optimal Fuzzy Extractors in Hamming distance and set metric space, respectively. A BC scheme needs to make the trade-off between biometric accuracy and template security due to the error correcting capacity of an ECC used to handle the large intra-user variation.

It is difficult to achieve unlinkability in BC schemes because any linear combination of error correction codewords may also be a codeword. It has been demonstrated that the majority of BC schemes suffer from this type of attack. In sum, there is an industry need for a biometric cryptosystem which is capable of efficiently and effectively satisfying the three criteria above of irreversibility, unlinkability, and renewability. Most important is the need to protect private user data.

Pandey Rohit Kumar et al: "Deep Secure Encoding for Face Template Protection", 2016 IEEE Conference on Computer Vision and Pattern Recognition Workshops (CVPRW), 26 June 2016, presents a framework for secure identification using deep neural networks, applied to the task of template protection for face password authentication.

## SUMMARY OF THE INVENTION

According to an aspect of the invention there is provided a method of enrolling a biometric sample in a cryptosystem scheme, the method comprising: extracting biometric feature data from a biometric sample of a user; generating a biometric vector from the biometric feature data, wherein the biometric vector is a vector representation of the biometric feature data; generating secret data, wherein the secret data represents private data associated with the user; generating a secret vector from the secret data, wherein the secret vector is a vector representation of the secret data; combining the biometric vector and the secret vector using an artificial neural network (ANN), the artificial neural network configured to output a neural network model; and, storing the neural network model in a database, thereby enrolling the biometric sample in a cryptosystem scheme for subsequent verification through authenticating released secret data, released from the neural network model, whilst hiding the biometric feature data and the secret data.

In this way, the enrolment scheme provides for effective enrolment of a biometric sample and subsequent verification whilst protecting a biometric template and the user's biometric information. The utilisation of a neural network model to combine the biometric vector with a secret vector allows for a robust mapping between a biometric vector and a secret vector in a biometric cryptosystem. The proposed scheme not only satisfies the requirements of a biometric template protection (BTP) scheme, but it also does not require a binary biometric feature representation to integrate cryptographic technology in the BC scheme, such as is required in the Fuzzy Commitment scheme. The proposed scheme ensures that biometric recognition performance is maintained. The secret data may for example be a random key, a hashed random key or password data.

The combining step comprises training the artificial neural network using the biometric vector as an input layer of the artificial neural network and the secret vector as an output layer of the artificial neural network to map the biometric vector to the secret vector such that both the biometric information and the secret data are hidden in the neural network model. The combining step may comprise training a plurality of neural network models, wherein each input vector and each output vector for the plurality neural network models are sub-vectors of the input vector and the output vector.

The step of generating a biometric vector comprises: generating a biometric feature vector from the biometric feature data; performing a random projection on the biometric feature vector prior to combination with the secret vector to generate a biometric projected vector so as to project the biometric feature vector onto random subspaces. It will be understood that dynamic random projection may be used.

The use of a random projection allows for the generation of unlinkable biometric templates, because original feature vectors can be projected to random vectors with different projection matrices. Advantageously the random projection is able to increase the dimensions of the vector contrary to common expectations. Random projection is typically used to reduce the dimensions of a vector to aid computational analysis and so its use would not be contemplated in the present scenario.

Optionally, random projection may be performed with $P$ projection vectors to project a $Q$-dimensional input vector where $P$ is equal or larger than $Q$. This may be known as performing random projection in a full-rank way. In this way the random projection increases the searching space to find the most distinguishing components in the output vector to use as input to the artificial neural network which is used to combine the secret vector. Further, the random projection increases the complexity of making a successful brute-force or hill-climbing attack towards the input or output of the trained artificial neural network model from the model parameters.

Optionally, the step of performing random projection may be performed using a specific projection matrix associated with a biometric instance. With the help of random projection, the original biometric feature vector can be projected onto a fix-length feature vector of random subspace that is derived from a user-specific projection matrix. Accordingly, the user specific information used for enrolment can be diversified and distributed to reduce the possibility of attack. The projection matrix may be stored on a secure token on a user device or stored remotely and retrieved to minimise accessibility.

The step of generating a biometric vector comprises generating a biometric representation vector from the biometric projected vector by selecting reliable components in the biometric projected vector to form a biometric representation vector as the biometric vector, wherein the reliable components are the most distinguishing components for biometric recognition accuracy performance.

When a full-rank random projection is used, the biometric recognition's accuracy performance may be improved by selecting from random projection's output vector reliable components in the sense that the most distinguishing components in terms of biometric recognition performance can be selected to form a biometric representation vector as the input to the subsequent neural network.

The step of performing reliable component selection may be based on a comparison of intra- and inter-class distances on each component of the biometric projected vector to identify the most distinguishing components in the biometric projected vector. The metric to rank the distinguishability of different dimensions may be a distance comparison between the intra-class (i.e., two vectors from the same biometric trait) and inter-class (i.e., two vectors from different biometric traits) cases.

The step of generating a secret vector may comprise: formatting the secret data to a binary form with length equal to the dimensionality of the output vector of the artificial neural network. For example, the secret vector's source data may be placed in arbitrary data format, to the $M$-bit binary form where $M$ is equal to the dimensionality of the output vector of the ANN. $M$ is a number desired by a specific application, for example $M = 256$ if we choose a hash function SHA-256 in the Secure Remote Password protocol (SRP) protocol.

The step of generating a secret vector may also comprise encoding the secret vector using an error correction coding technique. The use of error correction coding is introduced to tolerate a degree of difference between intra-user released keys in the proposed scheme. The neural network model acts as an error correction coding (ECC)-encoded representation of a secret related to a user biometric template. For instance, the error correction coding technique may use Bose-Chaudhuri-Hocquenghem (BCH) codes to create a BCH codeword.

Optionally, instead of a single neural network model to hide the biometric information and the secret, multiple neural network models can be used with their input vectors and output vectors being sub-vectors of the biometric representation vector and the secret vector respectively. The decomposition from a single neural network to multiple smaller neural networks may reduce the storage of the neural network model parameters.

According to another aspect of the invention there is provided a method of verifying a biometric sample in a cryptosystem scheme, the method comprising: extracting probe biometric feature data from a probe biometric sample; generating a probe biometric vector from the probe biometric feature data; retrieving a neural network model from a database; retrieving reference secret data from a database; computing a probe secret vector from the probe biometric vector using the neural network model; decoding the probe secret vector to probe secret data; verifying the probe secret data against the reference secret data; and, outputting a verification decision.

Accordingly a biometric sample is able to be verified from a stored neural network model once a sample has been previously enrolled in the scheme. The verification process takes place without exposing the biometric features or the biometric template to which the feature must be compared. The verification method may be a hash function if this biometric system is a standalone one, or it may be a password authentication protocol like SRP, or a challenge-response protocol if the secret was created as a private key in a public-key crypto scheme.

Preferably the step of computing comprises applying the probe biometric vector to a neural network model, the neural network model being trained to output an associated vector, and decoding the associated vector into the probe secret vector.

Optionally, the step of computing a probe secret vector comprises using an error correction coding technique to convert the associated vector output from the neural network into a probe codeword and decoding the probe codeword to create the probe secret vector. The use of error correction coding is introduced to tolerate a degree of difference between intra-user released associated vector in the proposed scheme. The neural network model acts as an error correction coding (ECC)-encoded representation of a secret vector related to a user biometric template. The error correction coding technique may use Bose-Chaudhuri-Hocquenghem (BCH) codes to create the probe codeword.

The step of generating a probe biometric vector comprises: generating a probe biometric feature vector from the probe biometric feature data; performing a random projection on the probe biometric feature vector prior to input to the neural network model to generate a probe biometric projected vector so as to project the probe biometric feature vector onto random subspaces. Accordingly, the input to the neural network model is similar in the enrolment and verification phases should the same random projection be performed in the enrolment and verification phases. The step of performing random projection may be performed using a projection matrix associated with a biometric instance. The matrix may be stored in a variety of locations such as on a secure token such that breach of multiple locations is required to attack the scheme.

The step of performing random projection may be performed with P projection vectors to project a $Q$-dimensional input vector where $P$ is equal or larger than $Q$.

The step of generating a probe biometric vector comprises: generating a probe biometric representation vector from the probe biometric projected vector by selecting reliable components in the probe biometric projected vector to form a probe biometric representation vector as the probe biometric vector, wherein the reliable components are the most distinguishing components for biometric recognition accuracy performance. The most distinguishing dimensions may be identified and selected to form the probe biometric representation vector as the input to the neural network model. The metric to rank the distinguishability of different dimensions may be a distance comparison between the intra-class (i.e., two vectors from the same biometric trait) and inter-class (i.e., two vectors from different biometric traits) cases.

The steps of performing reliable component selection may comprise retrieving a set of reliable components' indices from a database.

The artificial neural network may be a back propagation neural network. A back propagation neural network (BPNN) may be used as a multi-layer feed-forward network trained by the error back propagation method. BPNN is used to learn and store a mapping relation of input-output data, and there is no need to disclose in advance the mathematical expression that describes the mapping relation.

Optionally, the back propagation neural network comprises: an input layer defining a sigmoid function; a hidden layer defining a tangent sigmoid function; and, an output layer defining a liner function.

The back propagation neural network may comprise: an input layer containing a series of nodes, each configured to receive a component of the biometric feature vector. The back propagation neural network may comprise an output layer containing a series of nodes equal to a length of the secret vector. Each node of the output layer may be associated with a bit of the secret vector or the probe secret vector.

The random projection matrix and the neural network may be configured such that a Hamming distance between the codeword and the probe codeword, which can be derived from two neural network models trained from the same biometric feature but using different random projection matrices and neural network outputs, is greater than the error correcting code's error correcting capacity. This configuration prevents the linkability attacks having knowledge of two trained neural network models.

The random projection matrix and the neural network may be configured such that the following conditions are satisfied:

Mated Hamming distance: $HD(T_u, T_u') \leq t$ when genuine match is expected;

Mated Hamming distance: $HD(T_u, T_u') > t$ when a same biometric instance are used in diversified templates and unlinkability is expected; and,

Non-Mated Hamming distance: $HD(T_u, T_v) > t$ when false match is expected,

where $T_u$ is the (reference) codeword, $T_u'$ is the probe codeword, $T_v$ is a codeword generated from a different biometric trait and $t$ is an error correcting capacity of the error correcting code. Such Hamming distances prevent a cross-comparison attack.

The biometric sample may be selected from a group comprising: a fingerprint image; a voice sample; a fingervein image; a palmprint image; a palmvein image; a finger-knuckle image; a voice sample; an iris image; a retinal scan; an ear image; a periocular image; a face image; a three-dimensional face scan; and, dynamic biometric characteristic types, such as gait, in-air hand signature, keystroke, and mouse movement.

According to an aspect of the invention there is provided a computer readable medium storing instructions which when executed cause a computer to perform the method of any of the above aspects.

According to an aspect of the invention there is provided a system comprising a biometric client configured to detect a biometric sample; and, a processor configured to perform the method of any of the above aspects.

The present disclosure presents a novel biometric cryptosystem (BC) scheme to resist cross-comparison attacks while achieving high recognition performance. Where both the template databases and the secret are compromised, most current BC schemes suffer from cross-comparison attacks. To address this challenge, this proposed scheme preferably employs a random projection operation to generate unlinkable projected feature vectors with different user-specific projection matrices. In addition, a step of reliable component selection may be performed on the projected vector to enhance the biometric recognition accuracy performance. Besides the above consideration, the present disclosure hides the biometric representation vector and a secret vector using an artificial neural network. The network is used to map each feature vector to the secret vector based on the associated pattern in the neural network. The security of the proposed system is ensured by the irreversibility of both random projection and the combination of the biometric vector with a secret applied through a neural network. The proposed scheme achieves high security to satisfy the properties of irreversibility, unlinkability, and renewability.

## DETAILED DESCRIPTION

Examples of systems and methods in accordance with the invention will now be described with reference to the accompanying drawings, in which:-

Figure 1 shows a schematic block diagram of an example system according to the present invention;
Figure 2 shows a flow diagram of an example enrolment algorithm according to an embodiment of the present invention;
Figure 3 shows a flow diagram of an example verification algorithm according to an embodiment of the present invention;
Figure 4 shows a schematic overview of a neural network model for use in an example embodiment according to the present invention;
Figure 5 shows sample images from multiple biometric datasets;
Figure 6 shows a flow diagram of an example enrolment embodiment according to the present invention; and,
Figure 7 shows a flow diagram of an example verification embodiment according to the present invention.

In view of the limitations of existing biometric template protection (BTP) schemes, this disclosure presents a biometric cryptosystem (BC) scheme that can resist a linkability attack. The proposed scheme is preferably based on random projection and an artificial Neural Network (ANN), such as a Back Propagation Neural Network (BPNN). A random projection operation is firstly utilized to generate an unlinkable template by projecting each original biometric feature vector with a user-specific projection matrix. The size of the projected feature vector used in the proposed scheme is not restricted to the size of original template vector. The vector projected from the original vector can be of different sizes (using different sizes of projection matrices). An ANN model is further applied to hide the projected vector and its ECC-encoded secret as a given input-output relationship of a BC. Compared to existing BC schemes, the proposed scheme not only satisfies the requirements of a BTP scheme, but it potentially improves the biometric recognition accuracy performance.

In general, the contribution in this disclosure can be described as follows:-

- The proposed scheme addresses the challenges of irreversibility and unlinkability to enhance the security of biometric templates in the BC scheme by the combination of random projection, preferably a full-rank one, reliable component selection, and a biometric-secret combining process.

- The optional full-rank random projection can increase the dimensionality of the random projection's output so that a brute-force or hill-climbing attack towards the neural network's input or output is hard to succeed even when the adversary has the knowledge of the neural network model parameters.

- The reliable component selection operation can be used to identify those most distinguishing components among all components in an output vector from the random projection operation and thus improve the biometric recognition accuracy performance. The most distinguishing components refer to those components in a vector with minimum distance from the same components from intra-class vectors (vectors derived from the same biometric instance) and maximum distance from the same components from inter-class vectors (vectors derived from different biometric instances).

- The combination of random projection and reliable component selection operations can generate the biometric representation vector of any given dimensionality with maximized biometric recognition accuracy performance as an ideal input for the BC scheme.

- The neural network model is applied to combine the biometric representation vector with a secret vector, which can maintain biometric recognition accuracy performance as much as possible. The trained neural network model, which is stored as part of the template, is hard to be exploited to gain any information about the biometric representation vector if i) the biometric representation vector is a well-randomised result from the random projection operation so that the pre-images of the trained neural network model are even distributed, and ii) the dimensionality of the output vector of the neural network is lower than its input counterpart. This can prevent the key-inversion attack targeting at the exclusive-or (XOR) operation based biometric-secret combining scheme such as fuzzy commitment.

- Alternative to a single neural network model to hide the biometric information and the secret, multiple neural network models can be used with their input vectors and output vectors being sub-vectors of the biometric representation vector and the secret vector respectively. The decomposition from a single neural network to multiple smaller neural networks may reduce the storage of the neural network model parameters.

As will be understood, the terminology used herein is principally as defined by ISO SC37. Where deviation occurs, the meaning of each term will be understood from the context in which it is used.

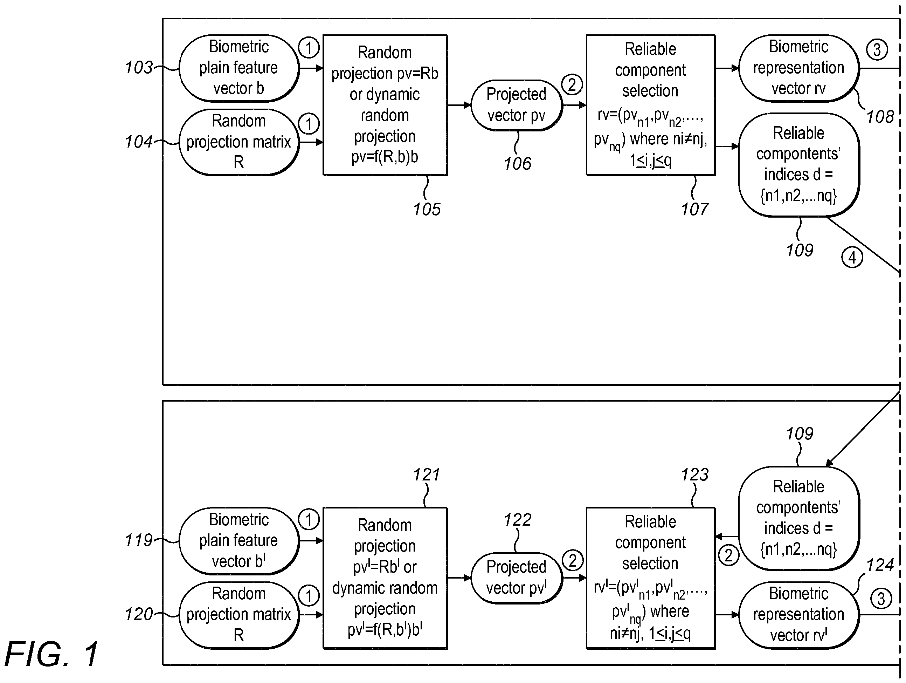

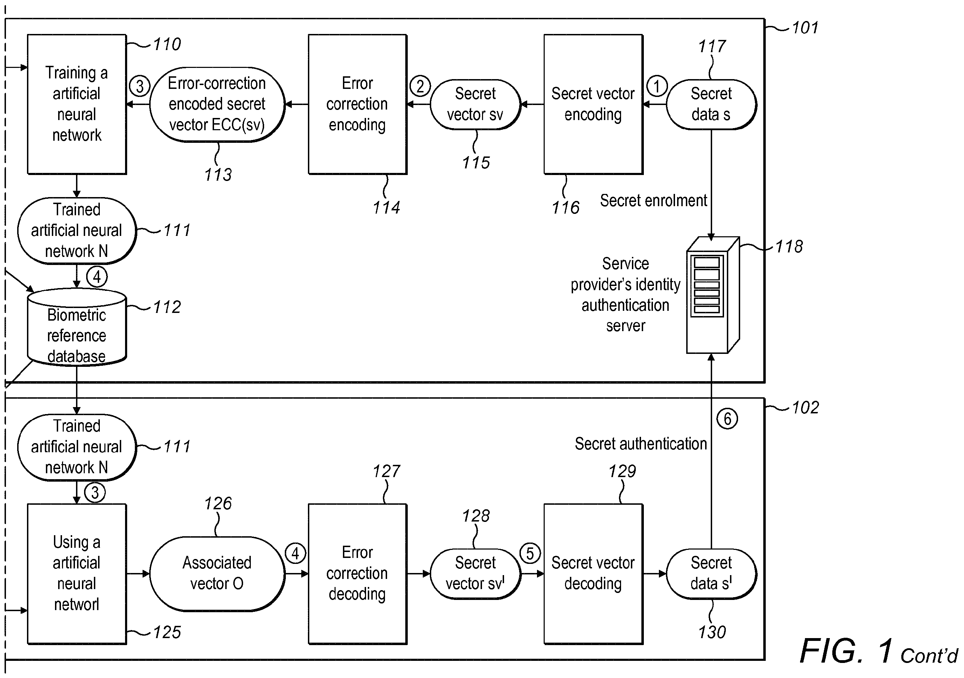

An example system will now be described. Fig. 1 presents the general block diagram of the proposed scheme which can build the connection between a plain biometric feature vector $b$ and a secret data $s$. Technically, the construction of a NN model in the proposed scheme means by building the connection between a biometric representation vector $rv$ (a real-value vector) derived from the plain feature vector $b$ supplied by the biometric data subject and an error-correction encoded form of the secret vector $sv$ (a binary vector) derived from a secret data representing the biometric data subject (e.g., a PIN, password, private key, random data, etc.) for identity authentication use. Conventional BC schemes employ a simple XOR function to combine a biometric feature vector with a secret. In the disclosed example, each component of the feature vector serves as a node in the input layer, while each component from the secret vector constitutes a node in the output layer. A NN model is trained to map the biometric representation vector $rv$ to the secret vector $sv$. Therefore, a biometric template can be concealed into a NN model, which can be represented by a set of weights in connections of nodes in adjacent layers and readily applied for biometric authentication. However, the input vector $rv$ for training a NN model may contain the intra-user variation due to the inherent fuzziness of biometric characteristics' representation.

Like FCS and FVS, therefore, the error correcting code (ECC) is also introduced to tolerate a degree of difference between the intra-user released associated vectors in the disclosed invention. In fact, the NN model acts as an ECC-encoded representation of a secret related to a user biometric template. Herein, we may for example use the "Bose, Ray-Chaudhuri, Hocquenghem" (BCH) code as the ECC, which is specified by the codeword length ($c$), the message length ($l$), and the corresponding number of error bits that can be corrected ($t$), in short, [$c$, $l$, $t$]. Accordingly, the BCH-encoded binary secret vector serves as the out layer for training NN model. When a probe biometric representation vector $rv'$ is input to a trained BPNN model, the network pattern is activated to output an associated vector $O$. Each component of the associated vector $O$ has been binarized to a BCH codeword based on a threshold, where it is set to '1' if the component's value is greater than the threshold, otherwise, it is set to '0'. If the probe representation vector sufficiently closes to the one previously enrolled as a reference, the same secret vector for verification can be decoded from the BCH codeword. Otherwise, the decoded secret vector is totally different to the one enrolled for training the BPNN model.

Random projection (RP) is a tool to project the original data vector onto a random subspace using a projection matrix. RP operation can preserve distances well, namely, the distances among projected features can be largely kept compared to the distances among the original features. On the other hand, RP is a desirable method for generating unlinkable biometric templates, because original feature vectors can be projected to random vectors with different projection matrices.

RP operation provides good distinguishability by projecting a biometric feature vector onto a set of orthonormal random vectors. For a n-dimensional biometric feature vector $b = (b_1, b_2, ... , b_n)^T \in R^n (i = 1, 2, ... , m)$, $b_i \in R(i = 1, 2, ... , n)$, an Gram-schmidt orthonormal random matrix $R = (r_1, r_2, ... , r_m)^T \in R^{m \times n}$, $r_i \in R^n (i = 1, 2, ... , m)$ is a $n$-dimensional random vector and each element $r_{ij}(i = 1, 2, ... , m, j = 1, 2, ... , n)$ in $R$ follows an independent and identically distributed (i.i.d) Gaussian distribution, $r_{ij} \sim N(0,1)$. The RP result $V$ is a $m$-dimensional vector, shown as:

$$v = Rb$$

The RP operation well addresses the distance-preserving problem in real-valued domain using the proposition of Johnson-Lindenstrauss Lemma (JL Lemma). According to JL Lemma, the Euclidean distance between the two projected biometric vectors from the same user who holds the same projection matrix $R$ is preserved approximately in the random subspace. It is easy to understand that this conclusion can be applied to the case of the full-rank projection, e.g., when $m \geq n$, as the concatenation of the subspaces does not impact on distance preservation.

The similarity and privacy-preserving properties of RP operation are applied to enhance the security of the biometric templates. For simplicity of exposition but without loss of generality, the feature vector $b$ in the above equation can be stored and considered as a biometric template. Therefore, the template's security can be guaranteed by keeping the projection matrix secret, thus it is desirable to generate unlinkable templates with different projection matrices. Note that the introduction of RP in this disclosure enhances the security of the original templates, but also generates the projected vectors with any given dimensionality as the input vector for a BC.

Artificial neural networks (ANN) are an important type of computational model applied in the field of machine learning. If a neural network is supplied with enough examples, it can perform data classification well and even discover new trends or patterns in data. As one of widely applied ANN models, BPNN is a multi-layer feed-forward network trained by the error back propagation method. BPNN is always used to learn and store a mapping relation of input-output data, and there is no need to set up in advance the mathematical expression that describes the mapping relation.

A BPNN model is for example composed of three layers, i.e., input layer, output layer, and hidden layer. Each layer has a number of nodes, and the nodes from input layer are connected to the nodes from hidden layer. The nodes from hidden layer are connected to the nodes from output layer. The weights between nodes represent the relationships of these connections. Back propagation (BP) algorithm is able to modify the connection weights of network based on mean square error and gradient descent. Essentially, the BP algorithm is a supervised learning method. Its training process includes forward and backward signal propagation. During the forward signal propagation, the weights of the network are maintained constant and the status of nodes in each layer only affects that of nodes in next layer. There are a number of activation functions applied to transform the activation level of a node into an output signal in a BPNN model. If the expected output cannot be achieved in the output layer, it will be switched into the backward signal propagation. The difference between the actual output and the expected output from the network is referred as the error signal. During the backward signal propagation, the error signal is propagated layer-by-layer from the output layer to the input layer. The continuous modification of weights makes the actual output much closer to the expected one. The above propagation process is iterated until the value of overall error drops below the predetermined threshold. After the training process, a BPNN model is available to be used for data classification.

Returning now to the proposed scheme and Figure 1, the scheme includes two main phases: enrolment 101 and verification 102. The enrolment phase 101 is responsible for training the NN model that is used to associate the enrolled biometric representation vector with the BCH-encoded secret vector. Instead of plain templates, the trained neural network model and the reliable components' indices can be stored safely in a database. The verification phase is responsible for releasing an associated vector from the trained NN model with a probe biometric representation vector. This associated vector is deemed as a BCH codeword. The secret vector can be produced from decoding the BCH codeword, and is used for identity authentication, for example, by an identity authentication server from a service provider side, which outputs an authentication decision.

Figure 1 illustrates a general block diagram of the proposed scheme. The block diagram is split into an enrolment phase 101 and a verification phase 102. The enrolment phase serves to enrol a biometric sample from a user into a scheme so that a user can be subsequently verified using the scheme by providing a biometric sample. A biometric feature vector 103 is extracted from a biometric sample. Using a random projection matrix 104, random projection or its variant dynamic random projection 105 is performed to generate a projected vector 106. By a reliable component selection operation 107, a biometric representation vector 108 and the selected components' indices 109 can be generated. The selected components' indices 109 are to be stored in a biometric reference database 112. A BP neural network is trained 110 using the representation vector 108 and an error-correction codeword 113. The error-correction codeword 113 is formed using a secret vector encoder 116 which forms a secret vector 115 which is encoded into the error-correction codeword by an error correction encoder 114. The secret vector 115 is a data format encoded version of a secret data 117 which is used for identity authentication purpose by communicating with an identity authentication server 118 in an application. In the database 112 is stored the model of the neural network 111, that is, the parameters of the network that map the representation vector into the codeword.

In the verification phase 102, a biometric feature vector 119 is generated from a biometric sample of a user. Using a random projection matrix 120, random projection or its variant dynamic random projection 121 is performed to generate a projected vector 122. With a set of reliable components' indices 109 supplied by the biometric reference database 112, a reliable component selection operation 123 generates a biometric representation vector 124. A BP neural network model 111 is retrieved from the database 112. The model 111 is applied to the neural network operation 125 taking as input the biometric representation vector 124 to generate a codeword 126. That is, the parameters translate the vector into a probe codeword 126. The codeword 126 is decoded by an error correction decoder 127 into a secret vector 128 which is subsequently decoded in data format by a secret vector decoder 129 into a secret data 130. The secret data 130 is authenticated by a secret authentication protocol by communicating with the identity authentication server 118 in an application to determine whether the biometric instance is the same as, or substantially similar to, the enrolled instance. Effectively, if the probe and the reference biometric samples are from the same biometric instance and sufficiently close to each other after feature extraction then the network that translates the representation vector into the neural network would generate the same secret vector. A secret authentication result is binary, i.e., match or non-match, depending on the similarity between the extracted features from the two biometric samples. Preferably they are identical or similar within a degree of tolerance.

In the following subsections, the proposed scheme will be discussed in detail.

In the enrolment phase, a user's original biometric feature is firstly extracted as the real-valued vector $b$, and the projected vector $pv = Rb$ is obtained with the RP matrix $R$. Then a biometric representation vector $rv$ can be generated as a sub-vector of $pv$ and consists of those most distinguishing components in $pv$. Meanwhile, a secret vector $sv$ is generated as a binary secret based on existing secret data $s$ which can be a freshly generated random data by a random number generator (RNG), or user generated PIN, password, etc., or a private key generated by a public-key based authentication scheme, see Figure 1. The BCH codeword ECC($sv$) is obtained by encoding $sv$. The representation vector $rv$ and the codeword ECC($sv$) are used to train a NN model, as illustrated in Fig.1. For example, a BPNN model in the proposed scheme has $n$ nodes in the input layer corresponding to the feature vector $rv$ of size $n$. The output of each node in the input layer is connected to all $h$ nodes of the hidden layer, and the number of nodes in the output layer is equal to the BCH codeword's length $c$, i.e., the length of codeword (associated vector $O$).

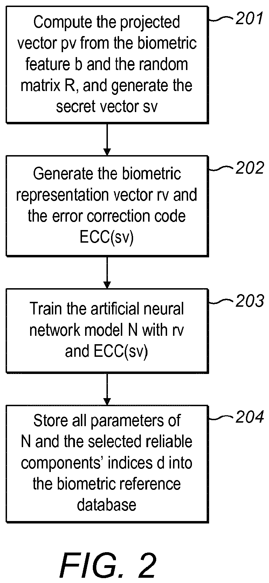

Figure 2 illustrates an algorithm of the process of enrolment in the proposed scheme. The inputs to the algorithm are the biometric feature vector $b$, the random projection matrix $R$, and the secret vector $sv$. The output to the enrolment process is a trained network model $N$. First: Compute the projected vector $pv = Rb$ by random projection or $pv = f(R,b)b$ by dynamic random projection where the projection matrix is dynamically generated from both $R$ and $b$, and in the meanwhile compute a secret vector $sv$ (step 201). Second: Generate a biometric representation vector $rv = (pv_{n1}, pv_{n2}, \ldots, pv_{nq})$ where $pv_{ni}$ $(1 \leq i \leq q)$ are selected reliable ones amongst $pv$'s components, and in the meanwhile compute the error correction encoded secret vector ECC($sv$) (step 202). The reliable components' selection can take as criterion maximising the inter-class distance and minimising the intra-class distance on each dimension of $pv$, which implies the need of a dataset consisting of multiple samples captured from the same biometric instance and samples captured from different biometric instances or subjects for statistics generation. Third: Train the NN model $N$ with $rv$ and ECC ($sv$) (step 203). Fourth: Store the all parameters of $N$ and the selected reliable components' indices generated from the Second step (step 202) $d$ into the database (step 204).

BPNN is a self-organization's neural network toward meeting a given input-output relationship between the representation feature vector $rv$ and the codeword ECC($sv$). The relevant activation functions are applied to learn this relationship based on a given accuracy. All parameters of the trained model $N$ for each user are stored in the database to produce the correct secret vector for the same user in the verification phase. The reliable components' indices values $d$ related to biometric instance is also stored in the database for the latter verification. Optionally, the projection random matrix $R$ or the seed for generating $R$ for each user can be stored in the data subject's security token that is rarely compromised in the same time as the biometric reference database by the adversaries.

In the verification phase, the real-valued vector $b'$ is extracted from a probe user's biometric sample, and the projected vector $pv' = Rb'$ is computed with the RP matrix $R$ that is taken from the user's security token. Then a probe biometric representation vector $rv'$ can be generated as a sub-vector of $pv'$ with the indices $d$ supplied from the biometric reference database to select the most distinguishing components in $pv'$. The biometric representation vector $rv'$ is applied to release its associated secret vector $sv'$ from the NN model $N$ stored in the database. Based on the input vector $rv'$, the model $N$ outputs the binary associated vector $O$. As a BCH codeword, $O$ can be decoded to a binary secret vector $sv'$. Consequently, the genuine or impostor decision in the verification phase is based on the authentication result of the released secret data $s'$ decoded from the secret vector $sv'$.

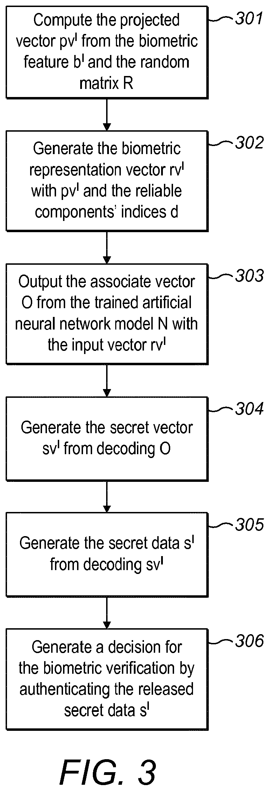

Figure 3 illustrates an algorithm of the verification process in the proposed scheme. The inputs to the algorithm are the biometric feature vector $b'$, the random projection matrix $R$, the BPNN model $N$, and the selected reliable components' indices $d$. The output of the algorithm is the decision of biometric verification. First: Compute the projected vector $pv' = Rb'$ by random projection or $pv' = f(R,b')b'$ by dynamic random projection where the projection matrix is dynamically generated from both $R$ and $b'$ (step 301) Second: Generate a biometric representation vector $rv' = (pv'_{n1}, pv'_{n2}, \ldots, pv'_{nq})$ where $pv'_{ni}$ ($1 \leq i \leq q$) are selected reliable ones amongst $pv$"s components, indicated by the indices $d$ retrieved from the database (step 302). Third: Output the associated vector $O$ from the BPNN model $N$ with the input vector $rv'$. Fourth: Generate the secret vector $sv'$ from decoding the associate vector $O$. Fifth: Generate the secret data $s$ from decoding $sv'$. Sixth: Output the decision based on whether released secret data $s$ can be authenticated in an identity authentication protocol used by an application.

There is a genuine acceptance when the Hamming distance (HD) between $O$ and $O'$ is not greater than the BCH code's error correcting capacityt, $HD(O, O') \leq t$. If $HD(O, O') \leq t$ is satisfied, $sv'$ will be correctly decoded to match the enrolled secret vectror $sv$ so that the biometric verification is successful. Thus, the verification process can also be considered as a HD classifier with the threshold $t$.

A BTP scheme should satisfy the security requirements: irreversibility, renewability, and unlinkability. In this section, we analyse the above security properties of the proposed scheme are analysed and it is shown how the proposed scheme can satisfy them.

Besides the randomness of RP matrices stored in the users' security tokens, there are two obvious factors to embody the irreversibility property of the proposed scheme: impossibility to leak the secret data or its equivalent from the database as it is not stored as part of template, and the difficulty of extracting valid information regarding the original biometric template from the NN model stored in the database. We assume that both the NN model and knowledge of error correction coding method, such as a BCH code [$c$, $l$, $t$], can be public and thus known to the adversaries.

Concerning brute-force attacks to the secret vector, the number of trials required to acquire a user's correct secret $sv$ is equal to $2^l$, where $l$ is the message length of BCH code. Since there is no defined input vector for the disclosed BPNN model of a user, the adversaries have to input a random vector $b'$ to produce a BCH codeword $O'$. If the condition of $HD(O, O') \leq t$ is satisfied, $O''$ can be correctly decoded to $sv$. For this type of attack, the adversaries have to tune the input vector $V'$ for satisfying the condition of $HD(T, T') \leq t$. Considering the BCH code's error correcting capacity $t$, it needs the number of trials $2^{c-t}$ for the adversaries to authenticate the $sv$. Therefore, the proposed scheme provides the computational complexity of min($2^l$, $2^{c-t}$)at least for the adversaries to guess the user's correct key.

Even if the adversaries guess the secret vector $sv$ successfully and get the codeword ECC($sv$) to approximate the biometric representation vector $rv$ through a simulated-annealing-based attack on the NN model, the user's original biometric feature vector $b$ cannot be obtained without the corresponding RP matrix $R$ (or cannot be obtained even $R$ is public if dynamic random projection is used). The irreversibility of the proposed scheme is analogous to that of a one-way hash function. It is easy to compute the hash value for any given message but infeasible to generate a message from its hash value. Similarly, the proposed scheme constitutes a high computational complexity for the irreversibility, especially for large values of $l$ and $c$.

A renewability analysis can be simplified as an assumption that a user revokes the old template and then generates a new one by using different helper data in the BC schemes. However, the adversaries try to be authenticated as a genuine user using the old template. In the proposed scheme, it is assumed that the adversaries have obtained an old BCH codeword ECC($sv$) derived from the same user. Considering the RP operation in the proposed scheme, the projected vector $pv = Rb$ shows the diversifiability if different projection matrices $R$ are applied to project the original biometric feature vector $b$. As mentioned, there is no information that can be disclosed to reconstruct the original feature vector $b$ if only its RP result $pv$ is obtained without knowing the RP matrix $R$ (or even knowing it by dynamic random projection) in the proposed scheme.

Constructing a new secret vector *sv'* and a new RP matrix *R'* in pairs, a new projected vector *pv' = R'b*, a new representation vector *rv,* and a new BCH-encoded vector ECC(*sv'*) can be computed, respectively. Both *rv'* and ECC(*sv'*) can be applied in the disclosed scheme to obtain a new NN model *N'*. In consideration of the error-correcting capacity t, it should satisfy the condition of *HD(O', O)* > *t* to avoid the false match caused by the error-correction process while generating a new *sv'*.

Thus, the number of different secret vectors that can be renewed for each enrolled user depends on the length of BCH codeword c and the error-correcting capacity *t*. There are $P = \sum_{i=1}^{c-t} \left( \binom{c}{t+i} \right)$ possibilities for constructing different codeword *O'* to satisfy the condition of *HD(O', O)* > *t.* In other words, the maximum number of the revoked template for each user is *P*.

It is important for BTP schemes to demonstrate the infeasibility of correlating different protected templates from the same biometric instance. While adversaries may obtain two protected templates, it is computationally hard for the adversaries to determine whether the protected templates are derived from the same user. This requirement of unlinkability can prevent cross-comparison attacks and avoid the possibility to trace an individual based on multiple biometric applications.

For the cross-comparison attack on the proposed scheme, it is assumed that the adversaries are at least in possession of two disclosed BPNN models. The adversarial goal is to determine whether the two BCH codeword *O* and *O'* are derived from the input feature vectors of the same user. To prevent such attacks, the mated Hamming distance between *O* and *O'* is required to be higher than the error-correcting capacity t, namely, a non-match verification decision is made according to *HD(O', O)* > *t.* Moreover, given two BCH codeword $O_u$ and $O_v$ generated from different users *u* and *v* with different BPNN models and RP matrices, the condition of $HD(O_u, O_v) > t$ for the non-mated (inter-user) Hamming distance still needs to be established as a non-match verification decision. Therefore, the following equations should be simultaneously established to prevent the cross-comparison attack.

$$\text{Mated Hamming distance:} \ HD(\boldsymbol{O}, \boldsymbol{O}') > t$$

$$\text{Non-Mated Hamming distance:} \ HD(\boldsymbol{O}_u, \boldsymbol{O}_v) > t$$

To generate the unlinkable templates (NN models) of the same biometric instance of a user for different biometric applications, the different secret vector and RP matrices should be chosen based on the above equation. Since any revoked codeword can satisfy this equation, adversaries cannot extract linkable information from diversified revocable codewords generated from the same user. It implies that the proposed scheme is able to meet the requirement of the unlinkability. That is, even if the adversaries know the mated/non-mated Hamming distance distributions, the probabilities that the two codes come from the same users ($HD_m$)and from different users ($HD_{nm}$)should be almost equal from the perspective of the adversary. It would be ideal for unlinkability if both distributions overlap. In such a case, it means that the generated templates are exactly unlinkable.

When implementing the BPNN model, there has not been an explicit theoretical instruction on choice of activation functions other than the trial and error method due to the variety in data distribution for classification. We find that activation functions, such as sigmoid function, tangent sigmoid function, and liner function, are in favour of the proposed scheme.

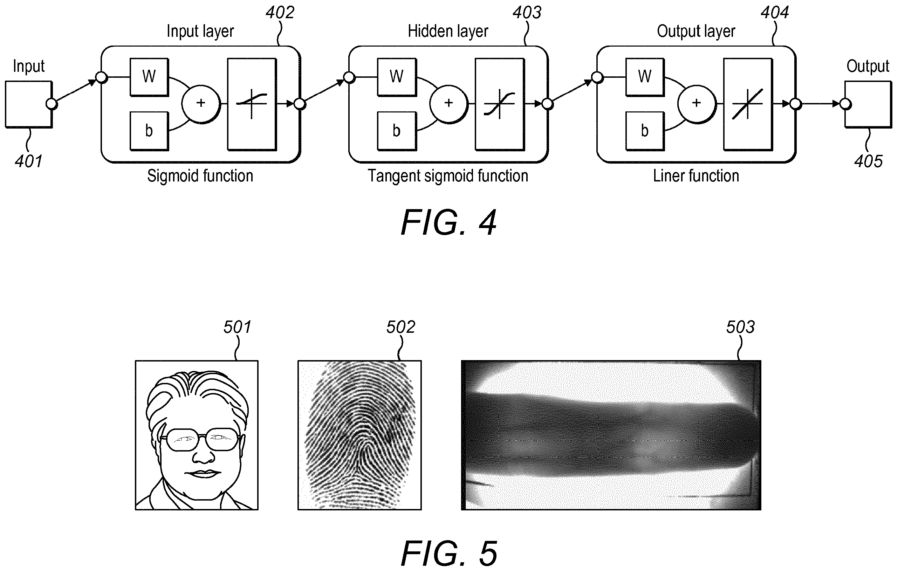

Figure 4 illustrates an overview of a BPNN model according to an example embodiment. The input 401 is input to the input layer 402, which is mapped to a hidden layer 403 and mapped to an output layer 404 to generate an output 405.

Figure 4 illustrates an overview of the BPNN model applied in experiments where w denotes the weight associated with the connection between nodes in different layers and *b* is the bias associated with the nodes in each layer. In addition, the characteristics of the BPNN model in the experiments are described as follows:

The input layer contains *m* nodes which are directly taken from each component of the representation vector, and the number of nodes in the output layer is equal to the length of BCH codeword *c.*

The optimal BCH code [*c, l, t*] needs to be determined by FMR and FNMR prior to implementing the proposed scheme. This is because the inter-user comparison errors will be corrected if BCH code has the too high-correcting capacity *t.* It may result in high false matching and improves FMR. However, the intra-uers errors cannot be corrected if the low error-correcting capacity *t* is applied. That is to say, the overall usability of the system will be degraded with the lower error-correcting capacity *t.* We should make the trade-off between the security (FMR) and the usability (FNMR). Therefore, our objective is to choose a BCH code to make FMR=0 for protecting security while minimizing FNMR to improve the usability in the experiments.

Figure 5 illustrates example image datasets, including a face image dataset 501, a fingerprint image dataset 502, and a fingervein image dataset 503.

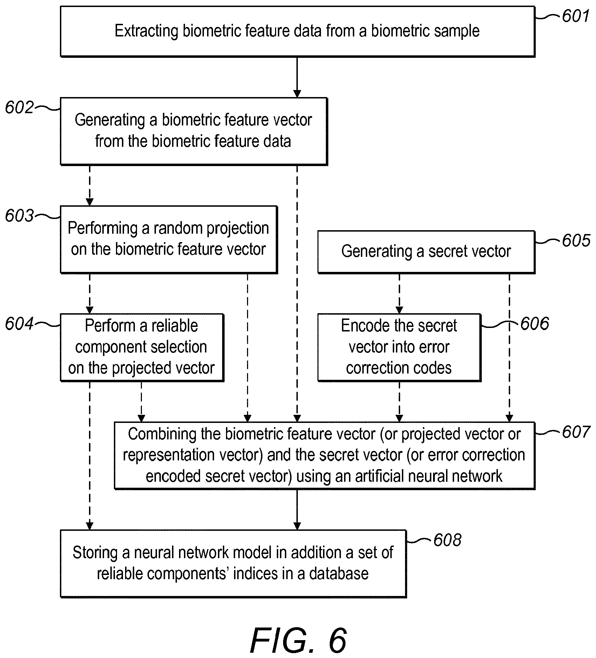

Figure 6 illustrates a flow diagram of an example enrolment embodiment of the present invention. In the flow diagram of figure 6, the enrolment example comprises: extracting biometric feature data from a biometric sample (step 601); generating a biometric feature vector from the biometric feature data (step 602); optionally, performing a random projection on the biometric feature vector to output a projected vector (step 603); optionally, performing a reliable component selection on the projected vector to output a representation vector (step 604); generating a secret vector (step 605); optionally, encoding the secret vector into error correction codes (step 606); combining the biometric feature vector resulting from the step of generating a biometric feature vector (or the projected vector or the representation vector) and the secret vector (or the error correction encoded form of the secret vector) using an artificial neural network (step 607); and, storing the neural network model resulted from step 607 and, optionally, the selected reliable components' indices in a database (step 608).

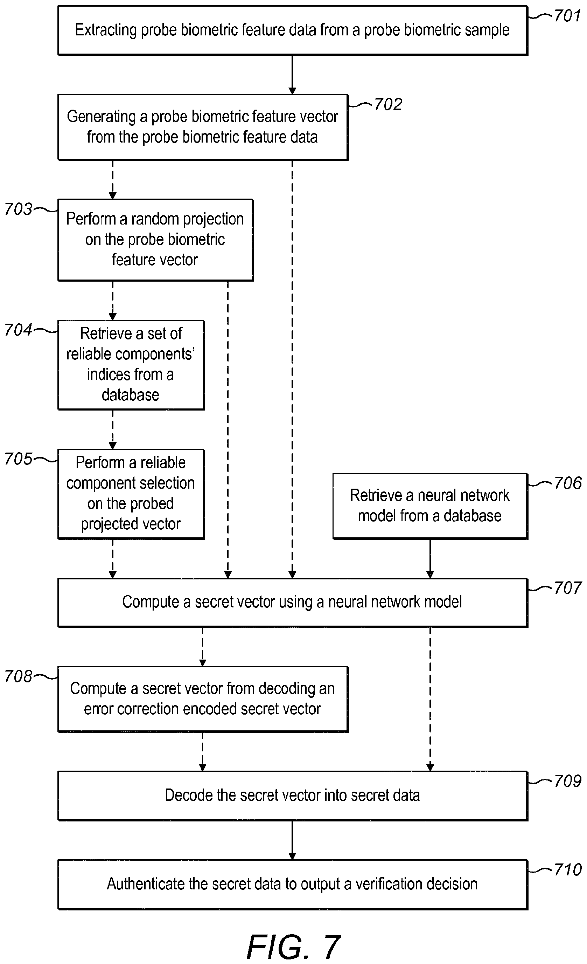

Figure 7 illustrates a flow diagram of an example verification embodiment of the present invention. In the flow diagram of figure 7, the verification example comprises: extracting probe biometric feature data from a probe biometric sample (step 701); generating a probe biometric feature vector from the probe biometric feature data (step 702); optionally, performing a random projection on the probe biometric feature vector to output a probe projected vector (step 703); optionally, retrieving a set of reliable components' indices from a database (step 704) and using the indices to select reliable components in the probe projected vector to output a probe representation vector (step 705); retrieving a neural network model from a database (step 706); computing a secret vector or an error correction encoded form of a secret vector from the probe biometric feature vector (or the probe projected vector, or the probe representation vector) using the neural network model (step 707); optionally, computing a secret vector from decoding the error correction encoded secret vector (step 708); decoding the secret vector to the secret data (step 709); and, authenticating the secret data to output a verification decision (step 710).

As identified above and as will be understood, the terminology used in the above description is principally as defined by ISO SC37. Where deviation occurs, the meaning of each term will be understood from the context in which it is used.

It will be understood that examples of further terminology used in the above may be as follows.

'Biometric instance' - This term may for example refer to different instances of the same biometric characteristic type. For example, a normal person has 10 instances of finger and 2 instances of iris

'Biometric representation vector' - This term may be considered to be a transformed vector as a secure and reliable representation of a plain biometric feature vector

'Secret data' - This term may be referred to as data to be bound with the biometric data via the neural network and to be released for a certain purpose when a biometric probe matches a biometric reference For example, a person's PIN, password, customer identification number, private key, etc. In certain embodiments, the secret data is the source data for a secret vector.

'Secret vector' - This term may be considered to be a vector representation of the secret data, meeting the length and binary form requirement as the output of a neural network.

'Biometric recognition accuracy performance' - This refers to the accuracy of biometric comparisons in terms of error rates for example false match rate and false non-match rate.

'Secret authentication' - This may refer to the verification in authenticity of the released secret from the neural network when a biometric probe matches a biometric reference. Note this operation can be implemented by different methods such as comparison of the two secrets directly, comparison of two hashes of the two secrets (released and the enrolled), a Password-Authenticated Key Agreement (PAKE) protocol, a public key based challenge-response scheme, a zero-knowledge proof (ZKP) scheme, etc. Note also that the performance of secret authentication is application dependent. For example, for a standalone system assuming a secure operational environment, comparisons of secrets or their hashes can achieve the purpose; for a remote authentication application across open network environment (such as online services), a PAKE or ZKP is preferred.

**Claims**

1. A method of enrolling a biometric sample in a cryptosystem scheme, the method comprising:

extracting (601) biometric feature data from a biometric sample of a user;
generating (602) a biometric vector from the biometric feature data, wherein the biometric vector is a vector representation of the biometric feature data;
generating secret data, wherein the secret data represents private data associated with the user;
generating (605) a secret vector from the secret data, wherein the secret vector is a vector representation of the secret data;
combining (607) the biometric vector and the secret vector using an artificial neural network, the artificial neural network configured to output a neural network model, wherein the combining step comprises training the artificial neural network using the biometric vector as an input layer of the artificial neural network and the secret vector as an output layer of the artificial neural network to map the biometric vector to the secret vector, such that both the biometric information and the secret data are hidden in the neural network model; and,
storing (608) the neural network model in a database, thereby enrolling the biometric sample in a cryptosystem scheme for subsequent verification through authenticating released secret data, released from the neural network model, whilst hiding the biometric feature data and the secret data;
wherein the step of generating (602) a biometric vector comprises:

generating a biometric feature vector from the biometric feature data; performing (603) a random projection on the biometric feature vector prior to combination with the secret vector to generate a biometric projected vector so as to project the biometric feature vector onto random subspaces; and
generating a biometric representation vector from the biometric projected vector by selecting (604) reliable components in the biometric projected feature vector to form a biometric representation vector as the biometric vector;
wherein the reliable components are the most distinguishing components for biometric recognition accuracy performance.

2. A method according to claim 1, in which the combining step (607) comprises training a plurality of neural network models, wherein each input vector and each output vector for the plurality neural network models are sub-vectors of the input vector and the output vector.

3. A method according to any preceding claim, wherein the step of performing reliable component selection (604) is based on a comparison of intra- and inter-class distances on each component of the biometric projected vector to identify the most distinguishing components in the biometric projected vector.

4. A method according to any preceding claim, in which the step of generating (605) a secret vector comprises: formatting the secret data to a binary form with length equal to the dimensionality of the output vector of the artificial neural network.

5. A method according to any preceding claim, in which the step of generating (605) the secret vector comprises: encoding (606) the secret vector using an error correction coding technique.

6. A method of verifying a biometric sample in a cryptosystem scheme, the method comprising:

extracting (701) probe biometric feature data from a probe biometric sample;
generating (702) a probe biometric vector from the probe biometric feature data;
retrieving (706) a neural network model from a database;
retrieving reference secret data from a database;
computing (707) a probe secret vector from the probe biometric vector using the neural network model;
decoding (709) the probe secret vector to probe secret data;
verifying (710) the probe secret data against the reference secret data; and,
outputting a verification decision;
wherein the step of generating (702) a probe biometric vector comprises:

generating a probe biometric feature vector from the probe biometric feature data;
performing (703) a random projection on the probe biometric feature vector prior to input to the neural network model to generate a probe biometric projected vector so as to project the probe biometric feature vector onto random subspaces; and
generating a probe biometric representation vector from the probe biometric projected vector by selecting (705) reliable components in the probe biometric projected vector to form a probe biometric representation vector as the probe biometric vector;
wherein the reliable components are the most distinguishing components for biometric recognition accuracy performance.

7. A method according to claim 6, in which the step of computing (707) comprises applying the probe biometric vector to a neural network model, the neural network model being trained to output an associated vector, and decoding the associated vector into the probe secret vector.

8. A method according to claim 6 or 7, in which the step of computing (707) a probe secret vector comprises using an error correction coding technique to convert the associated vector output from the neural network into a probe codeword and decoding (708) the probe codeword to create the probe secret vector.

9. A method according to any of claims 6 to 8, wherein the step of performing reliable component selection comprises retrieving (704) a set of reliable components' indices from a database.

10. A method according to any preceding claim, in which the step of performing a random projection (603, 703) is performed using a projection matrix associated with the biometric instance.

11. A method according to any preceding claim, in which the step of performing random projection (603, 703) is performed with $P$ projection vectors to project a Q-dimensional input vector where $P$ is equal or larger than $Q$.

12. A method according to any preceding claim, in which the artificial neural network is a back propagation neural network, and in which the back propagation neural network comprises:

    an input layer (402) containing a series of nodes, each configured to receive a component of the biometric feature vector; and
    an output layer (404) containing a series of nodes equal to a length of the secret vector.

13. A method according to claim 5 and 8 in which the random projection matrix and the neural network are configured such that the following conditions are satisfied:

    Mated Hamming distance: $HD(\boldsymbol{O}, \boldsymbol{O'}) \leq t$ when genuine match is expected;
    Mated Hamming distance: $HD(O, O') > t$ when a same biometric instance are used in diversified templates and unlinkability is expected; and,
    Non-Mated Hamming distance: $HD(\boldsymbol{O}_u, \boldsymbol{O}_v) > t$ when false match is expected,
    where $\boldsymbol{O}$ is the codeword, $\boldsymbol{O'}$ is the probe codeword, $\boldsymbol{O}_u$ and $\boldsymbol{O}_v$ are codewords generated from different biometric instances and $t$ is an error correcting capacity of the error correcting code.

14. A computer readable medium storing instructions which when executed cause a computer to perform the method of any preceding claim.

15. A system comprising:

    a biometric client configured to detect a biometric sample; and,
    a processor configured to perform the method of any of claims 1 to 13.


**Patentansprüche**

1. Verfahren zum Registrieren einer biometrischen Probe in einem Kryptosystemschema, wobei das Verfahren umfasst:

    Extrahieren (601) von biometrischen Merkmalsdaten aus einer biometrischen Probe eines Benutzers;
    Erzeugen (602) eines biometrischen Vektors aus den biometrischen Merkmalsdaten, wobei der biometrische Vektor eine Vektordarstellung der biometrischen Merkmalsdaten ist;
    Erzeugen von geheimen Daten, wobei die geheimen Daten private Daten darstellen, die dem Benutzer zugeordnet sind;
    Erzeugen (605) eines geheimen Vektors aus den geheimen Daten, wobei der geheime Vektor eine Vektordarstellung der geheimen Daten ist;
    Kombinieren (607) des biometrischen Vektors und des geheimen Vektors unter Verwendung eines künstlichen neuronalen Netzwerks, wobei das künstliche neuronale Netzwerk konfiguriert ist, um ein neuronales Netzwerkmodell auszugeben, wobei der Schritt des Kombinierens das Trainieren des künstlichen neuronalen Netzwerks unter Verwendung des biometrischen Vektors als Eingabeschicht des künstlichen neuronalen Netzwerks und des geheimen Vektors als Ausgabeschicht des künstlichen neuronalen Netzwerks umfasst, um den biometrischen Vektor auf den geheimen Vektor abzubilden, sodass beide, die biometrischen Informationen und die geheimen Daten im neuronalen Netzwerkmodell verborgen werden; und
Speichern (608) des neuronalen Netzwerkmodells in einer Datenbank, wodurch die biometrische Probe in einem Kryptosystemschema zur anschließenden Überprüfung durch Authentifizierung freigegebener geheimer Daten registriert wird, die aus dem neuronalen Netzwerkmodell freigegeben werden, während die biometrischen Merkmalsdaten und die geheimen Daten verborgen werden;
wobei der Schritt des Erzeugens (602) eines biometrischen Vektors umfasst:

Erzeugen eines biometrischen Merkmalsvektors aus den biometrischen Merkmalsdaten; Durchführen (603) einer zufälligen Projektion auf den biometrischen Merkmalsvektor vor dem Kombinieren mit dem geheimen Vektor, um einen projizierten biometrischen Vektor zu erzeugen, um den biometrischen Merkmalsvektor auf zufällige Unterräume zu projizieren; und
Erzeugen eines biometrischen Darstellungsvektors aus dem projizierten biometrischen Vektor durch Auswählen (604) von zuverlässigen Komponenten im projizierten biometrischen Merkmalsvektor, um einen biometrischen Darstellungsvektor als biometrischen Vektor zu bilden;
wobei die zuverlässigen Komponenten die prägnantesten Komponenten für die Genauigkeitsleistung der biometrischen Erkennung sind.

2. Verfahren nach Anspruch 1, wobei der Schritt des Kombinierens (607) das Trainieren einer Vielzahl von neuronalen Netzwerkmodellen umfasst, wobei jeder Eingabevektor und jeder Ausgabevektor für die Vielzahl von neuronalen Netzwerkmodellen Subvektoren des Eingabevektors und des Ausgabevektors sind.

3. Verfahren nach einem vorstehenden Anspruch, wobei der Schritt des Durchführens einer Auswahl von zuverlässigen Komponenten (604) auf einem Vergleich von Intra- und Interklassen-Distanzen bei jeder Komponente des projizierten biometrischen Vektors basiert, um die am prägnantesten Komponenten im projizierten biometrischen Vektor zu identifizieren.

4. Verfahren nach einem vorstehenden Anspruch, wobei der Schritt des Erzeugens (605) eines geheimen Vektors umfasst:
Formatieren der geheimen Daten in eine Binärform mit einer Länge gleich der Dimensionalität des Ausgabevektors des künstlichen neuronalen Netzwerks.

5. Verfahren nach einem vorstehenden Anspruch, wobei der Schritt des Erzeugens (605) des geheimen Vektors umfasst:
Codieren (606) des geheimen Vektors unter Verwendung einer Fehlerkorrektur-Codiertechnik.

6. Verfahren zum Überprüfen einer biometrischen Probe in einem Kryptosystemschema, wobei das Verfahren umfasst:

Extrahieren (701) von biometrischen Sondenmerkmalsdaten aus einer biometrischen Sondenprobe;
Erzeugen (702) eines biometrischen Sondenvektors aus den biometrischen Sondenmerkmalsdaten;
Abrufen (706) eines neuronalen Netzwerkmodells aus einer Datenbank;
Abrufen von geheimen Referenzdaten aus einer Datenbank;
Berechnen (707) eines geheimen Sondenvektors aus dem biometrischen Sondenvektor unter Verwendung des neuronalen Netzwerkmodells;
Decodieren (709) des geheimen Sondenvektors in geheime Sondendaten;
Überprüfen (710) der geheimen Sondendaten anhand der geheimen Referenzdaten; und
Ausgeben einer Überprüfungsentscheidung;
wobei der Schritt des Erzeugens (702) eines biometrischen Sondenvektors umfasst:

Erzeugen eines biometrischen Sondenmerkmalsvektors aus den biometrischen Sondenmerkmalsdaten;
Durchführen (703) einer zufälligen Projektion auf den biometrischen Sondenmerkmalsvektor vor Eingabe in das neuronale Netzwerkmodell, um einen projizierten biometrischen Sondenvektor zu erzeugen, um den biometrischen Sondenmerkmalsvektor auf zufällige Unterräume zu projizieren; und
Erzeugen eines biometrischen Sondendarstellungsvektors aus dem projizierten biometrischen Sondenvektor durch Auswählen (705) von zuverlässigen Komponenten im projizierten biometrischen Sondenvektor, um einen biometrischen Sondendarstellungsvektor als biometrischen Sondenvektor zu bilden; wobei die zuverlässigen Komponenten die prägnantesten Komponenten für die Genauigkeitsleistung der biometrischen Erkennung sind.

7. Verfahren nach Anspruch 6, wobei der Schritt des Berechnens (707) das Anwenden des biometrischen Sondenvektors auf ein neuronales Netzwerkmodell, wobei das neuronale Netzwerkmodell trainiert wird, um einen zugeordneten Vektor auszugeben, und das Dekodieren des zugeordneten Vektors in den geheimen Sondenvektor umfasst.

8. Verfahren nach Anspruch 6 oder 7, wobei der Schritt des Berechnens (707) eines geheimen Sondenvektors das Verwenden einer Fehlerkorrektur-Codiertechnik, um die zugeordnete Vektorausgabe aus dem neuronalen Netzwerk in ein Sondencodewort umzuwandeln, und das Decodieren (708) des Sondencodeworts umfasst, um den geheimen Sondenvektor zu erstellen.

9. Verfahren nach einem der Ansprüche 6 bis 8, wobei der Schritt des Durchführens einer Auswahl einer zuverlässigen Komponente das Abrufen (704) einer Reihe von Indizes zuverlässiger Komponenten aus einer Datenbank umfasst.

10. Verfahren nach einem vorstehenden Anspruch, wobei der Schritt des Durchführens einer zufälligen Projektion (603, 703) unter Verwendung einer Projektionsmatrix durchgeführt wird, die der biometrischen Instanz zugeordnet ist.

11. Verfahren nach einem vorstehenden Anspruch, wobei der Schritt des Durchführens einer zufälligen Projektion (603, 703) mit P Projektionsvektoren durchgeführt wird, um einen Q-dimensionalen Eingabevektor zu projizieren, wobei P gleich oder größer als Q ist.

12. Verfahren nach einem vorstehenden Anspruch, wobei das künstliche neuronale Netzwerk ein neuronales Back-Propagation-Netzwerk ist und wobei das neuronale Back-Propagation-Netzwerk umfasst:

eine Eingabeschicht (402), die eine Reihe von Knoten enthält, die jeweils konfiguriert sind, um eine Komponente des biometrischen Merkmalsvektors zu empfangen; und
eine Ausgabeschicht (404), die eine Reihe von Knoten enthält, die gleich einer Länge des geheimen Vektors ist.

13. Verfahren nach Anspruch 5 und 8, wobei die Zufallsprojektionsmatrix und das neuronale Netzwerk konfiguriert sind, sodass die folgenden Bedingungen erfüllt sind:

übereinstimmende Hamming-Distanz: $HD(\boldsymbol{O}, \boldsymbol{O'}) \leq t,$ wenn echte Übereinstimmung erwartet wird;
übereinstimmende Hamming-Distanz: $HD(\boldsymbol{O}, \boldsymbol{O'}) > t,$ wenn eine gleiche biometrische Instanz in verschiedenartigen Vorlagen verwendet wird und Nicht-Verknüpfbarkeit erwartet wird; und
nicht-übereinstimmende Hamming-Distanz: $HD(\boldsymbol{O_u}, \boldsymbol{O_v}) > t,$ wenn falsche Übereinstimmung erwartet wird, wobei $\boldsymbol{O}$ das Codewort ist, $\boldsymbol{O'}$ das Sondencodewort ist, $\boldsymbol{O_u}$ und $\boldsymbol{O_v}$ aus verschiedenen biometrischen Instanzen erzeugte Codewörter sind und $t$ eine Fehlerkorrekturkapazität des Fehlerkorrekturcodes ist.

14. Computerlesbares Medium, auf dem Anweisungen gespeichert sind, die, wenn sie ausgeführt werden, einen Computer veranlassen, das Verfahren nach einem vorstehenden Anspruch durchzuführen.

15. System, umfassend:

einen biometrischen Client, der konfiguriert ist, um eine biometrische Probe zu erkennen; und
einen Prozessor, der konfiguriert ist, um das Verfahren nach einem der Ansprüche 1 bis 13 durchzuführen.

## Revendications

1. Procédé d'inscription d'un échantillon biométrique dans un système cryptographique, le procédé comprenant les étapes consistant à :

extraire (601) des données de caractéristiques biométriques à partir d'un échantillon biométrique d'un utilisateur ;
générer (602) un vecteur biométrique à partir des données de caractéristiques biométriques, dans lequel le vecteur biométrique est une représentation vectorielle des données de caractéristiques biométriques ;

générer des données secrètes, dans lequel les données secrètes représentent des données privées associées à l'utilisateur ;

générer (605) un vecteur secret à partir des données secrètes, dans lequel le vecteur secret est une représentation vectorielle des données secrètes ;

combiner (607) le vecteur biométrique et le vecteur secret à l'aide d'un réseau neuronal artificiel, le réseau neuronal artificiel étant configuré pour produire un modèle de réseau neuronal, dans lequel l'étape de combinaison comprend la formation du réseau neuronal artificiel en utilisant le vecteur biométrique comme couche d'entrée du réseau neuronal artificiel et le vecteur secret en tant que couche de sortie du réseau neuronal artificiel pour mapper le vecteur biométrique au vecteur secret, de telle sorte que les informations biométriques et les données secrètes soient cachées dans le modèle de réseau neuronal ; et,

stocker (608) le modèle de réseau neuronal dans une base de données, inscrivant ainsi l'échantillon biométrique dans un système cryptographique pour une vérification ultérieure par authentification de données secrètes divulguées, divulguées du modèle de réseau neuronal, tout en masquant les données de caractéristiques biométriques et les données secrètes ;

dans lequel l'étape de génération (602) d'un vecteur biométrique comprend les étapes consistant à :

> générer un vecteur de caractéristiques biométriques à partir des données de caractéristiques biométriques ;
>
> réaliser (603) une projection aléatoire sur le vecteur de caractéristiques biométriques avant la combinaison avec le vecteur secret pour générer un vecteur biométrique projeté de manière à projeter le vecteur de caractéristiques biométriques sur des sous-espaces aléatoires ; et
>
> générer un vecteur de représentation biométrique à partir du vecteur biométrique projeté en sélectionnant (604) des composants fiables dans le vecteur de caractéristiques biométriques projeté pour former un vecteur de représentation biométrique en tant que vecteur biométrique ;
>
> dans lequel les composants fiables sont les composants les plus distinctifs pour les performances de précision de reconnaissance biométrique.

2. Procédé selon la revendication 1, dans lequel l'étape de combinaison (607) comprend la formation d'une pluralité de modèles de réseaux neuronaux, dans lequel chaque vecteur d'entrée et chaque vecteur de sortie pour la pluralité de modèles de réseaux neuronaux sont des sous-vecteurs du vecteur d'entrée et du vecteur de sortie.

3. Procédé selon une quelconque revendication précédente, dans lequel l'étape de réalisation d'une sélection de composants fiables (604) est basée sur une comparaison de distances intra- et inter-classes sur chaque composant du vecteur biométrique projeté pour identifier les composants les plus distinctifs dans le vecteur biométrique projeté.

4. Procédé selon une quelconque revendication précédente, dans lequel l'étape de génération (605) d'un vecteur secret comprend l'étape consistant à :
formater les données secrètes sous une forme binaire avec une longueur égale à la dimensionnalité du vecteur de sortie du réseau neuronal artificiel.

5. Procédé selon une quelconque revendication précédente, dans lequel l'étape de génération (605) du vecteur secret comprend l'étape consistant à :
coder (606) le vecteur secret en utilisant une technique de codage de correction d'erreurs.

6. Procédé de vérification d'un échantillon biométrique dans un système cryptographique, le procédé comprenant les étapes consistant à :

> extraire (701) des données de caractéristiques biométriques de sonde à partir d'un échantillon biométrique de sonde ;
>
> générer (702) un vecteur biométrique de sonde à partir des données de caractéristiques biométriques de sonde ;
>
> récupérer (706) un modèle de réseau neuronal à partir d'une base de données ;
>
> récupérer des données secrètes de référence à partir d'une base de données ;
>
> calculer (707) un vecteur secret de sonde à partir du vecteur biométrique de sonde en utilisant le modèle de réseau neuronal ;
>
> décoder (709) le vecteur secret de sonde en données secrètes de sonde ;
>
> vérifier (710) les données secrètes de sonde par rapport aux données secrètes de référence ; et,
>
> émettre une décision de vérification ;
>
> dans lequel l'étape de génération (702) d'un vecteur biométrique de sonde comprend les étapes consistant à :

générer un vecteur de caractéristiques biométriques de sonde à partir des données de caractéristiques biométriques de sonde ;

effectuer (703) une projection aléatoire sur le vecteur de caractéristiques biométriques de sonde avant l'entrée dans le modèle de réseau neuronal pour générer un vecteur biométrique de sonde projeté de manière à projeter le vecteur de caractéristiques biométriques de sonde sur des sous-espaces aléatoires ; et générer un vecteur de représentation biométrique de sonde à partir du vecteur biométrique de sonde projeté en sélectionnant (705) des composants fiables dans le vecteur biométrique de sonde projeté pour former un vecteur de représentation biométrique de sonde en tant que vecteur biométrique de sonde ;

dans lequel les composants fiables sont les composants les plus distinctifs pour les performances de précision de reconnaissance biométrique.

7. Procédé selon la revendication 6, dans lequel l'étape de calcul (707) comprend l'application du vecteur biométrique de sonde à un modèle de réseau neuronal, le modèle de réseau neuronal étant entraîné pour produire un vecteur associé, et le décodage du vecteur associé en vecteur secret de sonde.

8. Procédé selon la revendication 6 ou 7, dans lequel l'étape de calcul (707) d'un vecteur secret de sonde comprend l'utilisation d'une technique de codage de correction d'erreurs pour convertir le vecteur associé produit par le réseau neuronal en un mot de code de sonde et le décodage (708) du mot de code de sonde pour créer le vecteur secret de sonde.

9. Procédé selon l'une quelconque des revendications 6 à 8, dans lequel l'étape de réalisation d'une sélection de composants fiables comprend la récupération (704) d'un ensemble d'indices de composants fiables à partir d'une base de données.

10. Procédé selon une quelconque revendication précédente, dans lequel l'étape de réalisation d'une projection aléatoire (603, 703) est effectuée en utilisant une matrice de projection associée à l'instance biométrique.

11. Procédé selon une quelconque revendication précédente, dans lequel l'étape de réalisation d'une projection aléatoire (603, 703) est effectuée avec P vecteurs de projection pour projeter un vecteur d'entrée de Q. dimensions où P est égal ou supérieur à Q.

12. Procédé selon une quelconque revendication précédente, dans lequel le réseau neuronal artificiel est un réseau neuronal à rétro-propagation, et dans lequel le réseau neuronal à rétro-propagation comprend :

une couche d'entrée (402) contenant une série de noeuds, chacun étant configuré pour recevoir une composante du vecteur de caractéristiques biométriques ; et
une couche de sortie (404) contenant une série de noeuds égale à une longueur du vecteur secret.

13. Procédé selon les revendications 5 et 8, dans lequel la matrice de projection aléatoire et le réseau neuronal sont configurés de telle sorte que les conditions suivantes soient satisfaites :

Distance de Hamming accouplée : $HD(O, O') \leq t$ lorsqu'une véritable correspondance est attendue ;
Distance de Hamming accouplée : $HD(O, O') > t$ lorsqu'une même instance biométrique est utilisée dans des modèles diversifiés et qu'une dissociation est attendue ; et,
Distance de Hamming non accouplée : $HD(O_u, O_v) > t$ lorsqu'une fausse correspondance est attendue,
où $O$ est le mot de code, $O'$ est le mot de code de sonde, $O_u$ et $O_v$ sont des mots de code générés à partir de différentes instances biométriques et $t$ est une capacité de correction d'erreurs du code de correction d'erreurs.

14. Support lisible par ordinateur stockant des instructions qui, lorsqu'elles sont exécutées, amènent un ordinateur à effectuer le procédé selon une quelconque revendication précédente.

15. Système comprenant :

un client biométrique configuré pour détecter un échantillon biométrique ; et,
un processeur configuré pour effectuer le procédé d'une quelconque des revendications 1 à 13.

FIG. 1

FIG. 1 *Cont'd*

Compute the projected
vector pv from the biometric
feature b and the random
matrix R, and generate the
secret vector sv ⌐201

Generate the biometric
representation vector rv and
the error correction code
ECC(sv) ⌐202

Train the artificial neural
network model N with rv
and ECC(sv) ⌐203

Store all parameters of
N and the selected reliable
components' indices d into
the biometric reference
database ⌐204

## FIG. 2

Compute the projected vector $pv^I$ from the biometric feature $b^I$ and the random matrix R — *301*

Generate the biometric representation vector $rv^I$ with $pv^I$ and the reliable components' indices d — *302*

Output the associate vector O from the trained artificial neural network model N with the input vector $rv^I$ — *303*

Generate the secret vector $sv^I$ from decoding O — *304*

Generate the secret data $s^I$ from decoding $sv^I$ — *305*

Generate a decision for the biometric verification by authenticating the released secret data $s^I$ — *306*

*FIG. 3*

EP 3 669 297 B1

Input layer *402*

Input *401*

W

b

+

Sigmoid function

Hidden layer *403*

W

b

+

Tangent sigmoid function

Output layer *404*

W

b

+

Liner function

Output *405*

## FIG. 4

*501*  *502*  *503*

## FIG. 5

FIG. 6

```
┌─────────────────────────────────────────────────────────────┐
│ Extracting probe biometric feature data from a probe         │  ⌐701
│ biometric sample                                             │
└─────────────────────────────────────────────────────────────┘
                          │
                          ▼
        ┌──────────────────────────────────────┐  ⌐702
        │ Generating a probe biometric feature │
        │ vector from the probe biometric      │
        │ feature data                         │
        └──────────────────────────────────────┘
                    │
                    ▼
   703⌐  ┌──────────────────────────┐
         │ Perform a random         │
         │ projection on the probe  │
         │ biometric feature vector │
         └──────────────────────────┘
                    │
                    ▼
   704⌐  ┌──────────────────────────┐
         │ Retrieve a set of        │
         │ reliable components'     │
         │ indices from a           │
         │ database                 │
         └──────────────────────────┘
                    │
                    ▼
   705⌐  ┌──────────────────────────┐        ┌──────────────────────┐  ⌐706
         │ Perform a reliable       │        │ Retrieve a neural    │
         │ component selection      │        │ network model from   │
         │ on the probed            │        │ a database           │
         │ projected vector         │        └──────────────────────┘
         └──────────────────────────┘
                    │                                  │
                    ▼                                  ▼
   ┌─────────────────────────────────────────────────────────┐  ⌐707
   │ Compute a secret vector using a neural network model     │
   └─────────────────────────────────────────────────────────┘
                    │
                    ▼
   708⌐  ┌──────────────────────────────────────┐
         │ Compute a secret vector from         │
         │ decoding an error correction         │
         │ encoded secret vector                │
         └──────────────────────────────────────┘
                    │
                    ▼
   ┌─────────────────────────────────────────────────────────┐  ⌐709
   │ Decode the secret vector into secret data                │
   └─────────────────────────────────────────────────────────┘
                    │
                    ▼
   ┌─────────────────────────────────────────────────────────┐  ⌐710
   │ Authenticate the secret data to output a verification    │
   │ decision                                                 │
   └─────────────────────────────────────────────────────────┘
```

*FIG. 7*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PANDEY ROHIT KUMAR et al.** Deep Secure Encoding for Face Template Protection. *2016 IEEE Conference on Computer Vision and Pattern Recognition Workshops (CVPRW),* 26 June 2016